# EUROPEAN PATENT APPLICATION

(11) **EP 4 837 726 A2**
(43) Date of publication of application: **11.11.2026**
(21) Application number: 25226066.6
(22) Date of filing: 19.12.2025
(51) Int. Cl.: B29C 64/25, B29C 64/106, B29C 64/124, B29C 64/245, B29C 64/255, B29C 64/295, B29C 64/307, B29C 64/336, B33Y 10/00, B33Y 30/00, B33Y 40/00, B33Y 50/00, B33Y 50/02

(54) **MULTI-MATERIAL PRINTING RESERVOIR AND PLATFORM SYSTEM FOR ADDITIVE MANUFACTURING DEVICES**

(30) Priority: 20.02.2025 US 202519059144
(71) Applicant: SprintRay, Inc., Los Angeles, California 90065 (US)
(72) Inventor: YE, Shukun, 900065 Los Angeles (US); SHAO, Steven, 900065 Los Angeles (US); MANSOURI, Amir, 900065 Los Angeles (US); TIAN, Huijian, 900065 Los Angeles (US)
(74) Representative: Herzog IP Patentanwalts GmbH

(57) **Abstract**

A 3D printing system for retrofitting a 3D printer to print multiple 3D-printed objects. The system includes a platform (102, 606, 800, 1002,1801, 1900) adapted to be used with the 3D printer, which includes a plurality of build surfaces (110, 607, 608, 1802, 1903), multiple reservoirs (103, 701, 1803, 2000) adapted to register with the build surfaces of the platform, each reservoir storing a unique printing material, and an adapter (107, 1005, 1804) configured to secure the reservoirs to a base (1006, 1203, 1303, 1503, 1602) )of the 3D printer in a manner so that: each of the reservoirs are aligned with a curing light engine (1813) of the 3D printer (1810), and each of the reservoirs registers with a corresponding build surface of the build surfaces of the platform. This system enables simultaneous printing with multiple photopolymer materials, significantly reducing overall printing time and improving printing efficiency.

## Description

### PRIORITY OR RELATED APPLICATIONS

This application is a continuation-in-part of U.S. Non-Provisional Application No. 18/244,380, filed on September 11, 2023, which is a continuation of U.S. Patent Application No. 18/133,521, filed on April 11, 2023, which is a Non-provisional Application of, and claims priority to, U.S. Provisional Application No. 63/329,847, filed on April 11, 2022, the disclosure of each incorporated by reference in their entirety.

### TECHNICAL FIELD

The present invention generally relates to additive manufacturing devices. More specifically, the present invention relates to devices, systems, and methods for creating three-dimensional (3D) objects with additive manufacturing techniques that employ a single-use cartridge, which may be disposable or recyclable.

### BACKGROUND

3D printing is a process that creates three-dimensional objects by depositing materials, usually in layers. Additive manufacturing uses 3D modeling software to create designs or scan objects. The software then translates the design into a layer-by-layer framework for additive manufacturing. 3D printing encompasses several manufacturing technologies. Each technology differs in material selection, surface finish, durability, and manufacturing speed and cost. One among them is Digital Light Processing (DLP).

DLP is a process of creating objects by a 3D printer that uses a digital light projector as the light source for curing photo-reactive polymers. The DLP technology utilizes light and a liquid resin to make solid parts and products. The light source incident on the surface of the object being printed is controlled by micromirrors present in the system. In general, the DLP printers are built around a resin tank with a transparent bottom and a build platform at the top to create objects layer by layer. It is similar to Stereolithography (SLA) but differs in the use of the different light sources.

A process of additive manufacturing using Stereolithography has four essential components. It uses a Photopolymer, housed in a VAT, which is exposed to a Light source. The light from the light source initiates polymerization to convert liquid to solid on a build platform, to which the solid part attaches to. Current systems utilize a generalized VAT, which houses a high volume of photopolymer and uses large platforms to provide a high degree of versatility to print. This has a drawback in the form that more resin is needed to initiate prints and if a print fails, it brings a risk of wasting more volume of resin. Furthermore, the resin is poured at the discretion of the user who can either pour a high or low volume of resin which might cause a failed print.

Various additive manufacturing processes and technologies are known in the art, however, none of them provide solution as an additive manufacturing device with multiple tanks on the same printer (i.e., DLP printer) with single Z-axis control for printing multiple materials at once. Further, a disposable or reusable cartridge to build specific components with minimal resin handling is nowhere disclosed.

Therefore, there is a need for a 3D printing device to print multiple materials at once. Also, there is a need for a device with a disposable or single-use cartridge that minimizes waste and obviates the need for some equipment. Further, there is a need for a cartridge, container, or tank assembly that minimizes the forming material waste during small batch printing. It is to these ends that the present invention has been developed.

### SUMMARY OF THE INVENTION

The present invention generally discloses an additive manufacturing device that employs a single-use cartridge or reservoir assembly adapted to minimize forming material waste during small batch printing.

In exemplary embodiments, the cartridge, which may be disposable or recyclable, includes a built-in forming material reservoir and build plate that is utilized by an additive manufacturing device to form a single 3D object.

According to some aspects of the invention, a 3D printing system for retrofitting a 3D printer to print multiple 3D-printed objects is provided. The system includes a platform adapted to be used with the 3D printer, which includes a plurality of build surfaces, multiple reservoirs adapted to register with the build surfaces of the platform, each reservoir storing a unique printing material, and an adapter configured to secure the reservoirs to a base of the 3D printer in a manner so that: each of the reservoirs are aligned with a curing light engine of the 3D printer, and each of the reservoirs registers with a corresponding build surface of the build surfaces of the platform. This system enables simultaneous printing with multiple photopolymer materials, significantly reducing overall printing time and improving printing efficiency.

According to some aspects of the present invention, the additive manufacturing device may be referred to as a 3D printer. The 3D printer may comprise a container or cartridge-based resin tank that may be pre-filled and sealed with a forming material such as a light-curable resin. In some exemplary embodiments, the cartridge-based resin tank with light-cured resin is an innovative and intelligent solution that has been designed to allow operators to go through the print process with minimal resin handling and eliminates the need to measure the amount of resin during setup. In some exemplary embodiments, the resin is in a form of liquid or paste. The resin is hardened using visible and/or ultraviolet (UV) light. In some exemplary embodiments, the cartridge-based resin tank comprises a penetrable layer or sealing layer on its top side. The penetrable layer is configured to seal the resin. In some exemplary embodiments, the cartridge-based resin tank further comprises an optically clear layer on another side. The optically clear layer is configured to allow the passage of UV light to initiate polymerization.

In some exemplary embodiments, the cartridge-based resin tank comprises a small build platform area or build platform or build plate. In some exemplary embodiments, the build platform is a surface to which the printed part adheres during the printing process. In some exemplary embodiments, the build platform is configured to support the printed part during the printing process. In some exemplary embodiments, the build platform allows for application-specific containers to minimize resin waste during small print batches. In some exemplary embodiments, the container and build platform may come in a type of cartridge that is used up to build specific components, for example, a dental appliance. Once built, the cartridge-based resin tank and build platform or cartridge is used up and thrown out, that is disposable, or recycled.

In some exemplary embodiments, the cartridge-based resin tank further comprises a print screen or print surface. In some exemplary embodiments, the print screen is the surface that allows light to pass through to cure the resin. The print screen is bonded with the cured resin. The bond between the print screen and resin is weak enough that the part can be separated from the print screen in order to print the next layer. In some exemplary embodiments, the print occurs inside the cartridge-based resin tank that is pre-filled with the resin. In some exemplary embodiments, the build platform and print screen are incorporated into the sealed, prefilled cartridge-based resin tank of light cured resin.

In some exemplary embodiments, the build platform may be located internal or external to the cartridge-based resin tank. In some exemplary embodiments, the build platform is incorporated into the cartridge-based resin tank. In this arrangement, the cartridge-based resin tank houses the resin and the build platform. In some exemplary embodiments, a Z axis arm of the 3D printer houses a mating arrangement. The mating arrangement is configured to mate with the build platform in the cartridge-based resin tank and breaks the seal for the resin in the cartridge-based resin tank. Once the print is finished, the printed part is removed from the print screen and the build platform can be discarded. In this type of build platform configuration, the platform arm and the external printer features get very little resin exposure and do not require user cleaning.

In another embodiment, the build platform resides external to the cartridge-based resin tank. In some exemplary embodiments, the build platform may be located on the Z axis arm of the 3D printer. In this arrangement, the build platform resides on the Z axis arm. In some exemplary embodiments, the build platform has an arrangement that allows it to puncture the seal on the top side of the cartridge-based resin tank and access the resin to initiate the printing process.

In some exemplary embodiments, the build platform interacts with the penetrable layer or sealing surface in different methods to access the resin. The interaction methods may include a puncture interaction method and a built-in platform interaction method. In puncture interaction method, the sealing surface of the cartridge-based resin tank is punctured by the build platform. In some exemplary embodiments, the puncture is designed to eliminate the contamination of the resin from the seal.

In built-in platform interaction method, the build platform resides inside of the cartridge-based resin tank. In some exemplary embodiments, a mechanism associated with the Z axis arm interacts with the build platform and clutches the build platform to initiate the printing process. In some exemplary embodiments, the build platform punctures the penetrable layer before initiating the printing process. In another embodiment, the penetrable layer moves and flexes according to the printing cycle. In some exemplary embodiments, the penetrable layer is made of a flexible material.

In some exemplary embodiments, the cartridge-based resin tank is used with one or more adapters to house the resin vat. The adapter may interact with the cartridge-based resin tank through either a mechanical fastening or a magnetic fastening. In some exemplary embodiments, the adapter may be a fixed part or a removable part.

In another embodiment, a single DLP printer is used to print with multiple materials at once. The single DLP printer comprises a platform that can be split but not have independent z-axis controls. In some exemplary embodiments, the single DLP printer comprises a container. In some exemplary embodiments, the container may be a disposable tank that holds the print resin during the printing process. In some exemplary embodiments, the container is pre-filled with light-cured resin for the printing process. In some exemplary embodiments, the container comprises one or more compartments configured to hold the print resin during the printing process. The container physically separates the resin into separate compartments. This can be done with a divider on a single part of the use of multiple containers.

In some exemplary embodiments, the container further comprises a build platform or build plate. In some exemplary embodiments, the build platform is the surface that the printed part adheres during the printing process. In some exemplary embodiments, the container and the build platform may come in a type of cartridge that is used up to build specific components, for example, a dental appliance. In some exemplary embodiments, the container further comprises a print screen. In some exemplary embodiments, the print screen is the surface that allows light to pass through to cure the resin. The print screen is bonded with the cured resin. The bond is weak enough that the part can be separated from the screen in order to print the next layer. In some exemplary embodiments, the build platform further comprises at least one built-in heater to achieve a faster heat up time.

The above summary contains simplifications, generalizations and omissions of detail and is not intended as a comprehensive description of the claimed subject matter but, rather, is intended to provide a brief overview of some of the functionality associated therewith. Other systems, methods, functionality, features and advantages of the claimed subject matter will be or will become apparent to one with skill in the art upon examination of the following figures and detailed written description.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
**FIG. 1** illustrates a block diagram for a system in accordance with some exemplary embodiments of the present invention
**FIG. 1A** illustrates a cut-sectional view of a cartridge in accordance with some exemplary embodiments of the present invention.
**FIG. 1B** illustrates the operation of a cartridge in accordance with some exemplary embodiments of the present invention.
**FIG. 2** illustrates a system in accordance with some exemplary embodiments of the present invention.
**FIG. 3** - **FIG. 5** illustrate an adapter and adapter components for utilizing a cartridge in accordance with the present invention with conventional 3D printers
**FIG. 6** illustrates an exploded view of a cartridge in accordance with some exemplary embodiments of the present invention in which multiple
**FIG. 7** illustrates a perspective view of a resin tank in accordance with some exemplary embodiments of the present invention.
**FIG. 8** - **FIG. 9** illustrate different perspective views of a build platform of the 3D printer in some exemplary embodiments of the present invention.
**FIG. 10** illustrates an exploded view of a cartridge in accordance with some exemplary embodiments of the present invention.
**FIG. 11** illustrates a perspective view of a cartridge in accordance with the embodiment illustrated in FIG. 10.
**FIG. 12 - FIG. 17** illustrates different perspective views of adapters in accordance with some exemplary embodiments of the present invention.
**FIG. 18** illustrates a block diagram of a device or kit in accordance with some exemplary embodiments of the present invention.
**FIG. 18-1** illustrates a block diagram of a system in accordance with some exemplary embodiments of the present invention.
**FIG. 18-2** illustrates a flow chart of a method in accordance with some exemplary embodiments of the present invention.
**FIG. 19** illustrates an exploded view of a 3D printing kit in accordance with the present invention.
**FIG. 20** illustrates a posterior bottom perspective view of a platform of a 3D printing kit in accordance with the present invention.
**FIG. 21** illustrates an isometric side view of a platform of a 3D printing kit in accordance with the present invention, further illustrating a detailed view of the interior of the multiple build platforms.
**FIG. 22** illustrates an isometric side view of the plurality of tanks of a 3D printing kit in accordance with the present invention.
**FIG. 23** illustrates an exploded view of one of the plurality of resin tanks of 3D printing kit in accordance with the present invention.
**FIG. 24** illustrates a rear view of a resin tank of a 3D printing kit in accordance with the present invention.
**FIG. 25** illustrates a top view of the plurality of resin tanks of a 3D printing kit in a stacked state.
**FIG. 26** illustrates a cross-sectional view at A-A in FIG. 24.
**FIG. 27** illustrates a cross-sectional view of the plurality of resin tanks of a 3D printing kit in a stacked state.
**FIG. 27-1** illustrates reservoirs coupled to an adapter in accordance with the present invention.
**FIG. 28** illustrates an isometric side view of the adapter of a 3D printing kit in accordance with the present invention.
**FIG. 29** illustrates a top view of an adapter of a 3D printing kit in accordance with the present invention.
**FIG. 30** illustrates a cross-sectional view at A-A in FIG. 28.
**FIG. 31A - FIG.31B** illustrates a posterior bottom perspective view of an adapter of a 3D printing kit in accordance with the present invention.
**FIG. 32** illustrates a cross-sectional view at B-B in **FIG. 28****.**
**FIG. 33** illustrates an exemplary flow chart for an RFID reading of an adapter of a 3D printing kit in accordance with the present invention.

### DETAILED DESCRIPTION OF THE INVENTION

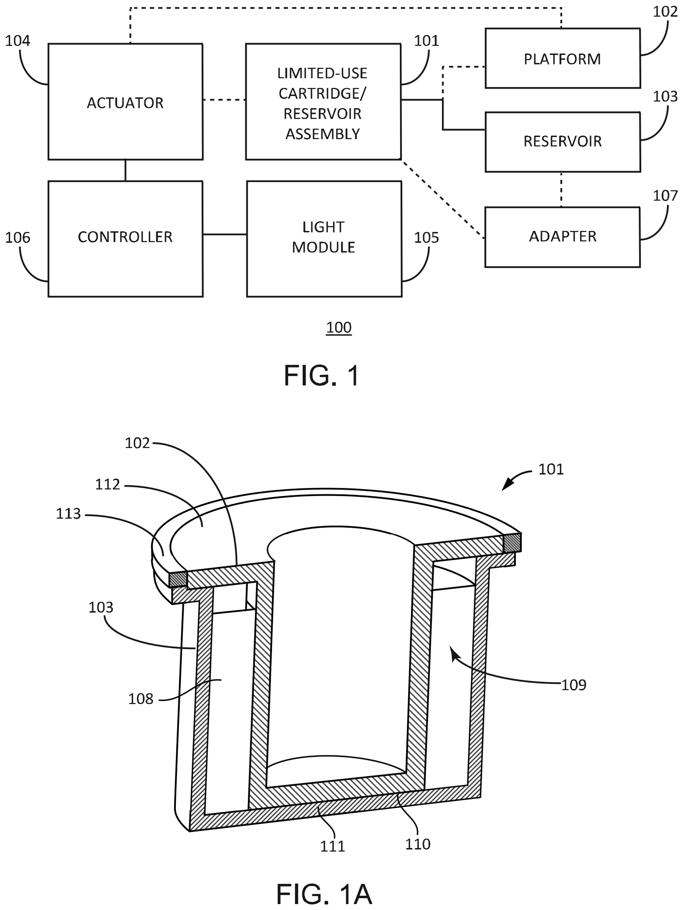

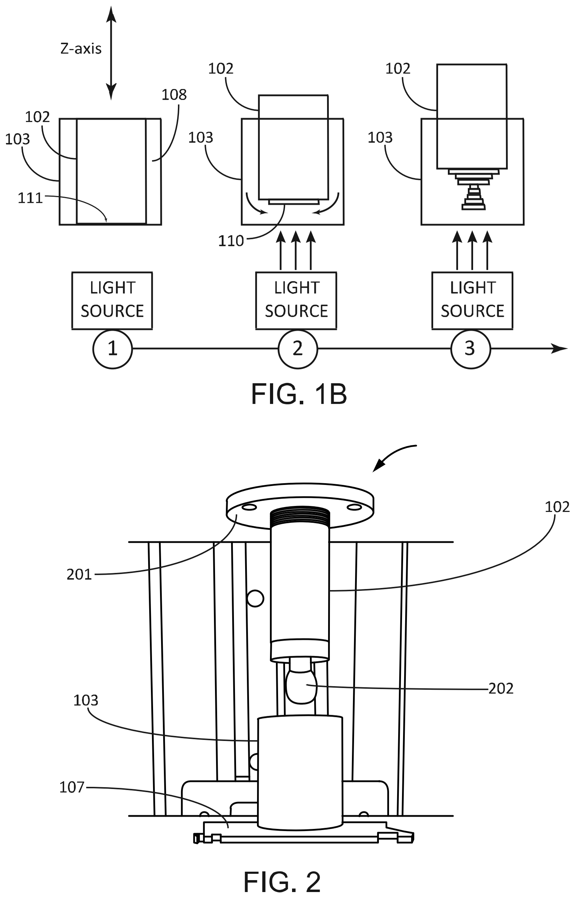

A description of embodiments of the present invention will now be given with reference to the Figures. It is expected that the present invention may be embodied in other specific forms without departing from its spirit or essential characteristics. The described embodiments are to be considered in all respects only as illustrative and not restrictive. Generally, the invention involves an apparatus and system for
Turning first to **FIG. 1****,** a block diagram for a system in accordance with some exemplary embodiments of the present invention is illustrated. More specifically, **FIG. 1** depicts system **100,** which includes a reservoir assembly **101,** which houses a forming material such as a light-curable resin, a platform **102,** which in some exemplary embodiments as discussed below may be a component of reservoir assembly **101** or a separate component than the reservoir assembly **101,** a tank or reservoir **103** that houses the forming material and which generally is integral with the reservoir assembly **101,** an actuator **104** for moving platform **102** along a z-axis in relation to the reservoir **103,** a light module **105** for curing a layer of the forming material onto a surface of the platform or onto a previously cured layer of the forming material until a three-dimensional (3D) object is formed; and a controller **106** configured to actuate the platform and emit curable light into the reservoir in order to form the 3D object. Moreover, in some exemplary embodiments as will be discussed further below, one or more adapters **107** may be employed to adapt an existing additive manufacturing device such as a 3D printer, for utilizing a reservoir assembly in accordance with the present invention.

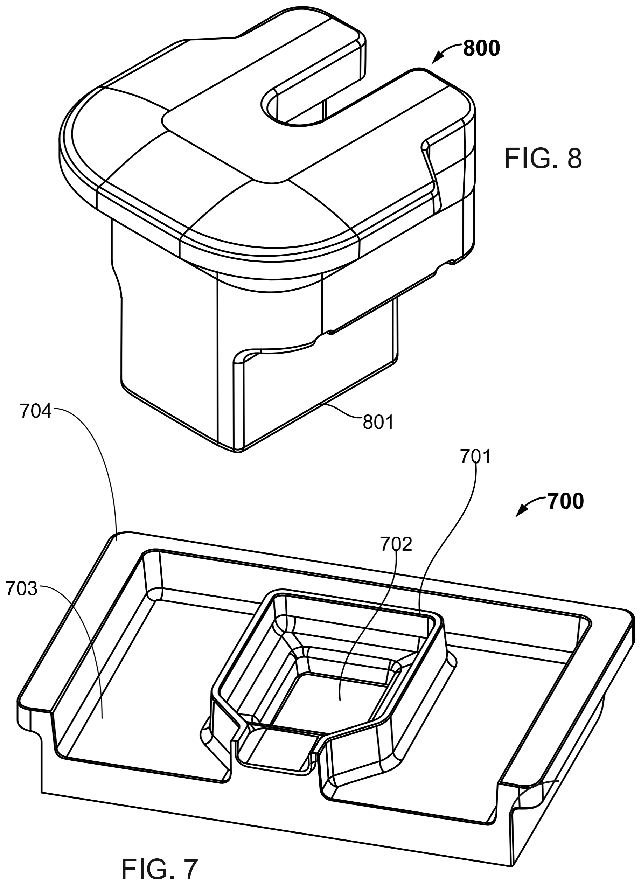

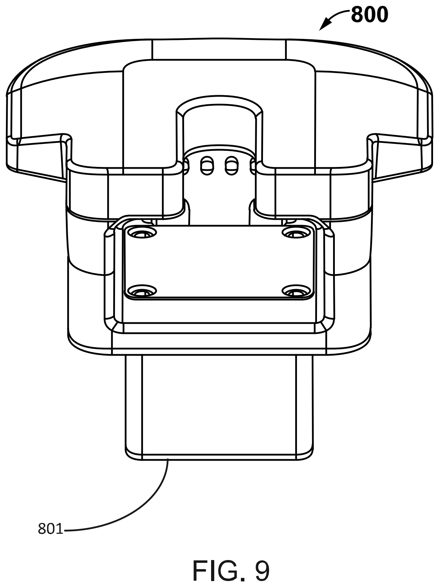

Reservoir assembly **101** is adapted to house a forming material such as a light-curable resin. In some exemplary embodiments, reservoir assembly **101** is a limited-use cartridge that is pre-filled with enough forming material or resin to build a single 3D object such as, for example in the dental field, a single crown, a single dental appliance, or a single printable 3D object. In some exemplary embodiments, the cartridge is limited-use because once the 3D-printed object is formed, the cartridge may be disposed (i.e., single-use) or recycled. In embodiments of the present invention in which reservoir assembly **101** comprises a cartridge, the reservoir assembly **101** may comprise platform component that forms platform **102** on which the intended 3D object is formed or cured to during the forming process, and a reservoir component that forms reservoir **103** for securing and keeping fresh the forming material or resin intended to be used to form the 3D object. For example, and without limiting the scope of the present invention, see **FIG. 1A****,** **FIG. 6****,** **FIG. 10,** and **FIG. 11****,** showing different embodiments of a limited-use cartridge in accordance with the present invention that include both a platform and reservoir within the cartridge or reservoir assembly.
In yet other exemplary embodiments in accordance with the present invention, for example as shown in **FIG. 7, FIG. 8****,** and **FIG. 9****,** a reservoir assembly **101** may exclude platform **102.** In embodiments in which reservoir assembly **101** excludes platform **102,** system **100** nevertheless utilizes platform **102,** except that platform **102** is a separate component - not integral with reservoir assembly **101** - which is similarly actuated with actuator **104** that is configured to move platform **102** along a z-axis in relation to reservoir **103.** Reservoir **103** is, in such exemplary embodiments, integral with reservoir assembly **101** so that a portion of reservoir assembly **101** forms the reservoir **103** that holds or houses the forming material or resin for forming the intended 3D object.

Platform **102,** whether integral with or separate from reservoir assembly **101,** includes a build surface adapted to receive a layer of the forming material that is typically cured onto the build surface to support the 3D object that is built onto the platform **102.** As such, platform **102** should be constructed of a suitable material as it is understood in the art of additive manufacturing that is compatible with printing or forming materials.

Reservoir **103** is generally integral with or form part of reservoir assembly **101** and typically includes a transparent surface that both holds the forming material inside the reservoir **103** and allows a curing light through in order to cure a layer of the forming material onto the platform or onto a previously cured layer of the forming material in order to form or build the 3D object from the forming material onto the platform.

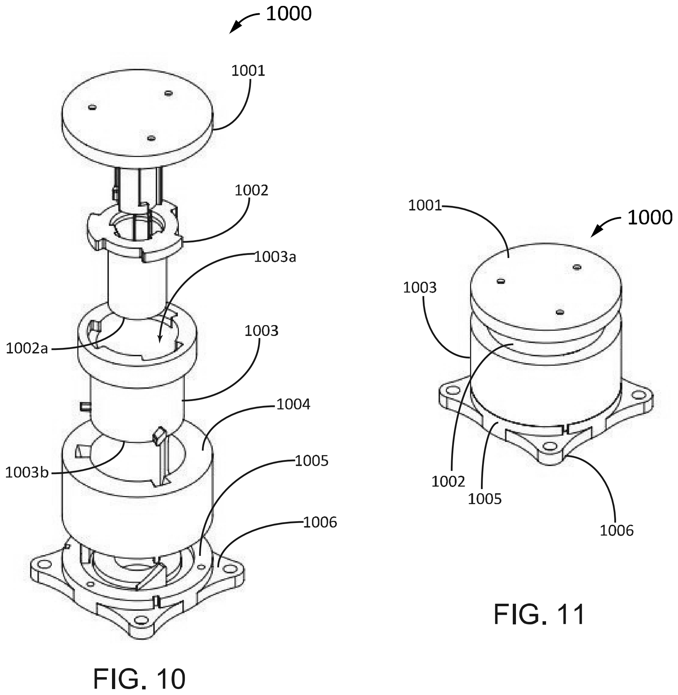

Actuator **104** is generally any suitable motor or movable component that may be configured to move platform **102** along a z-axis in relation to reservoir **103** during a forming or printing process to build the 3D object. In some exemplary embodiments, actuator **104** couples directly to a portion of the cartridge or reservoir assembly **101** (see for example **FIG.** or **FIG. 10**). In some exemplary embodiments, for example in which reservoir assembly **101** is not a cartridge and does not include platform **102,** actuator **104** may couple directly with a component of platform **102** that is external to reservoir assembly **101** in order to move the platform during the formation process.

Light module **105** may be any suitable light source for curing the forming material into the intended 3D object. For example, and without limiting the scope of the present invention, because different forming materials are activated by different types of energy, light module may implement different components to project the suitable light in order to cure the forming material inside reservoir assembly **101.** Thus, while in some embodiments light module may employ components for using blue or ultraviolet light or any other appropriate wavelength based on the properties of forming material to activate the forming agent, it will be appreciated by one of ordinary skill in the art that when a forming material or agent is used that requires other forms of energy, e.g., infrared light, laser light, X-rays, gamma radiation and the like, the light module should be suitably modified to generate and output such required energy. Therefore, for example, when infrared is projected onto the forming agent, the appropriate hardware and software must be employed so that a projector of light module **105** can generate and project such infrared light. Likewise, if X-rays or gamma radiation is used, the projector may be replaced entirely by an energy emitter that can produce and emit the appropriate energy format onto the forming agent.

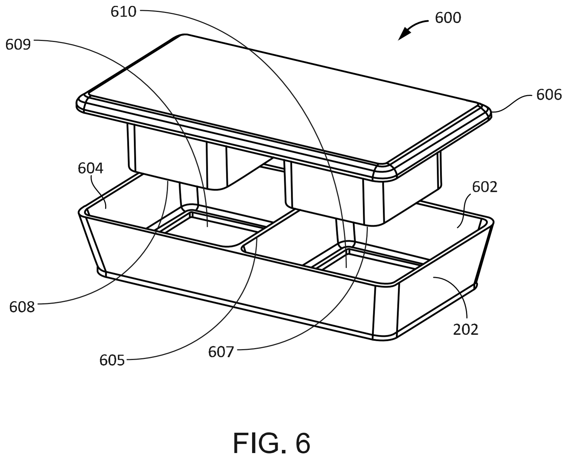

In some exemplary embodiments, light module **105** may include multiple light engines that may be used to increase the maximum build space while maintaining a desired resolution. In such embodiments, the light engines may be placed inside a pre-designed fixture to maintain them in place. In some other embodiments one or multiple light engines may be used and translated at the same time over the build space to maintain a resolution while having the maximum build space. In some exemplary embodiments, multiple light engines may be employed to print multiple products that come in a single reservoir assembly **101** such as a cartridge with dual reservoirs and dual platforms suitable for forming two 3D products during a single batch; this configuration may be useful for printing products that may require different components with different forming materials that would otherwise require forming in separate batches. For example, and without limiting or deviating from the scope of the present invention, a set of dentures may be formed in a single batch with one reservoir of the reservoir assembly dedicated for the gums component of the dentures which requires a first type of forming material, and a second reservoir of the reservoir assembly dedicated for the teeth component of the dentures which requires a second type of forming material. See **FIG. 6** as a non-limiting example of a reservoir assembly suitable for holding two forming materials and printing multiple 3D objects in a single build batch.

Controller **106** is a suitable controller in charge of receiving model data from a remote computer or locally to process images and to drive actuator **104** and control light module **105** in order for system **100** to form the intended 3D objects. To these ends, while multiple configurations for controller **106** may be possible without deviating from the scope of the present invention, controller **106** is generally configured to actuate platform **102** and emit curable light into the reservoir **103** in order to form the intended 3D object for which a suitable amount of forming material is included in a limited-use or short-term use reservoir assembly **101.**

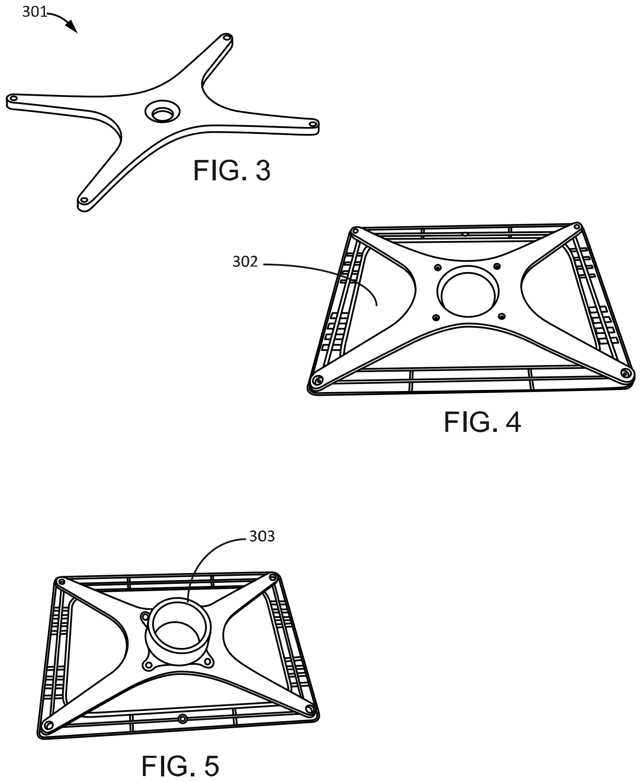

Moreover, in some exemplary embodiments as will be discussed further below, system **100** may include one or more adapters **107** for facilitating use of reservoir assembly **101** with conventional or existing additive manufacturing devices such as 3D-printers. For example, **FIG. 3** - **FIG. 5** show an adapter assembly that retrofits or adapts a transparent substrate or glass of an existing light engine to receive a reservoir assembly or cartridge in accordance with some exemplary embodiments of the present invention. In another example, **FIG. 7** shows an adapter that retrofits or adapts an existing tank to receive a reservoir assembly or cartridge in accordance with some exemplary embodiments of the present invention.

**FIG. 1** **A** illustrates a cut-sectional view of a cartridge in accordance with some exemplary embodiments of the present invention. More specifically, **FIG. 1** **A** illustrates a cut- sectional view of reservoir assembly **101,** which is a cartridge in accordance with exemplary embodiments of the present invention. As will be described below, in the embodiment of **FIG. 1A****,** the reservoir assembly or cartridge **101** includes both a reservoir **103** that holds a forming material or resin **108,** as well as a platform **102** that is movably built into the cartridge **101.** In this embodiment, cartridge **101** is pre-filled and sealed with light-cured resin **108.** This embodiment of cartridge **101** allows operators to go through a print or build process with minimal resin handling and eliminates the need to measure the amount of resin during setup. In some exemplary embodiments, the resin **108** is in a form of liquid or paste. The resin **102** is hardened using visible and/or ultraviolet (UV) light.
In this embodiment, cartridge **101** includes an outer housing that at least partially forms reservoir **103** and is adapted to receive platform **102** inside the housing. In exemplary embodiments, a cavity **109** is formed between platform **102** and the interior walls of reservoir **103,** wherein cavity **109** is prefilled with, or otherwise suitable to receive, resin **108.** In exemplary embodiments, the bottom surface **110** of platform **102** is a build surface onto which the intended 3D object is cured during a build process. In a sealed or prior to use state, platform **102** is secured against a bottom surface **111** of reservoir **103,** which is transparent, optically clear, or otherwise configured to allow the passage of curing light, for example UV light, to allow polymerization during use of cartridge **101.**

In an initial stage, or prior to being used, cartridge **101** is preferably sealed so that surface **110** of platform **102** is secured against surface **111** of reservoir **103,** thereby preserving an integrity of the resin holding cavity **109** so that resin **108** stays fresh inside cartridge **101** prior to use. During operation, as shown in **FIG. 1A****,** at step **(1)** cartridge **101** is situated or placed so that the cartridge **101** may be exposed to a curing light from a light module of system **100.** In step **(2),** platform **102** is lifted or otherwise moved along a z-axis with reference to reservoir **103,** so that surface **110** of platform **102** separates from surface **111** of reservoir **103,** allowing resin **108** to flow from cavity **109** into the space between surfaces **110** and **111** of platform **102** and reservoir **103,** respectively. This may be achieved via activating actuator **104** that has been adapted to move platform **102,** for example up and down, so that platform **102** is lifted away from and lowered back to reservoir **103.** In exemplary embodiments, an adapter **107** is utilized in order to secure cartridge **101** to a securing structure, for example a transparent support plate of the light module **105.** During or in between movement of platform **102** along the z-axis, light module may be activated to a emit curing light and cure a layer of the resin **108** onto a surface of the platform **110.** In step **(3),** the process of moving platform **102** and directing a light from the light module **103** into the reservoir through transparent surface **111** is repeated so that a 3D object may be formed layer by layer inside reservoir **103.**

In some exemplary embodiments, cartridge **101** further comprises a penetrable layer or sealing layer **112** on its top side. The penetrable layer **112** is configured to seal the resin and secure platform **102** in place. As mentioned above, build surface **110** is a surface to which the printed part adheres during the printing process. In some exemplary embodiments, build surface **110** is configured to support the built part during the forming process. In some exemplary embodiments, platform **102** may include a dimension of about **2500** mm² or less. In some exemplary embodiments, build surface **110** allows for usage of application-specific containers to minimize resin waste during small print batches. In some exemplary embodiments, cartridge **101** and build surface **110** may be provided as a type of cartridge that may be used to build specific components, for example, a dental appliance. Once built, the cartridge **101** and build surface **110** or cartridge may be used up and disposed of or recycled.

As mentioned above, cartridge **101** comprises a surface **111,** which is generally a print screen. In some exemplary embodiments, the print screen is the surface that allows light to pass through to cure the resin **108.** The print screen may be bonded with the cured resin **108.** However, the bond between print screen and resin is generally weak so that the 3D printed part, or each layer formed thereof, can be separated from the print screen in order to form the next layer.

In some exemplary embodiments, formation of the 3D object **200** occurs inside cartridge **101** that is pre-filled with the resin **108** as shown in **FIG. 2****.** In some exemplary embodiments, a Z axis arm of a 3D printer includes a mating arrangement **201.** The mating arrangement **201** is configured to mate with platform **102** of cartridge **101** and breaks a seal for forming material inside cartridge **101.** Once the forming of the 3D object is completed, the 3D object or 3D-printed part **202** may be removed from cartridge **101** and platform **102** can be discarded or recycled. In this type of build platform configuration, a platform arm and the external additive manufacturing device components get very little exposure to the forming material (e.g., resin) and do not require user cleaning.

In another embodiment, the build surface **110** resides external to the cartridge **101.** In some exemplary embodiments, the build surface **110** may be located on the Z axis arm of the 3D printer. In this arrangement, the build surface **110** resides on the Z axis arm. In some exemplary embodiments, build surface **110** has an arrangement that allows it to puncture the seal on the top side of the cartridge **101** and access the resin **102** to initiate the printing process.

In some exemplary embodiments, platform **102** interacts with a penetrable layer or sealing surface in different methods to access the forming material. The interaction methods may include a puncture interaction method and a built-in platform interaction method. In a puncture interaction method, the sealing surface of cartridge **101** may be punctured by the platform. In some exemplary embodiments, the puncture is designed to eliminate the contamination of resin from the seal.

In a built-in platform interaction method, the platform resides inside of cartridge **101.** In some exemplary embodiments, a mechanism associated with the Z axis arm interacts with the platform and clutches the platform to initiate the printing process. There may be a couple of variations of this system. In some exemplary embodiments, the platform punctures a penetrable layer before initiating the printing process. In another embodiment, the penetrable layer moves and flexes according to the printing cycle. In some exemplary embodiments, the penetrable layer is made of a flexible material.

Referring to **FIG. 3** - **FIG. 5****,** an adapter assembly is illustrated. More specifically, the adapter assembly shown is configured to retrofit or adapt an existing transparent substrate or glass of a light engine to receive a reservoir assembly or cartridge in accordance with some exemplary embodiments of the present invention. In exemplary embodiments, adapter components **(301, 302,** and **303)** may interact with the cartridge **101** through either a mechanical fastening or a magnetic fastening. In some exemplary embodiments, the adapter components **(301, 302,** and **303)** may be a fixed part, where it becomes a part of the additive manufacturing device, such as an existing 3D printer. In another embodiment, the adapter components **(301, 302,** and **303)** may include removable parts, where the components sit securely on the printer and can be accessed or moved by the user.

For example, and without deviating from the scope of the present invention, **FIG. 3** shows an exemplary reservoir assembly adapter frame **301** configured to couple to a screen or transparent plate **302 shown in** **FIG. 4** of a 3D printer, or a light module of a 3D printer (not shown). The reservoir assembly adapter frame **301** is also configured to receive a cartridge holder **303** shown in **FIG. 5****,** to which a cartridge or reservoir assembly of a cartridge in accordance with the present invention may be secured to.

Referring to **FIG. 6****,** an exploded view of a cartridge **600** of a single DLP printer is illustrated. In some exemplary embodiments, the single DLP printer is used to print with multiple materials at once. The single DLP printer comprises a platform that can be split but does not have independent z-axis controls. In some exemplary embodiments, cartridge **600** may be a disposable reservoir assembly that holds the print resin or forming material during the forming or printing process. In some exemplary embodiments, cartridge **600** is pre-filled with light-curable resin; in some exemplary embodiments, multiple types of curable resin may be sealed and stored in cartridge **600.** To these ends, cartridge **600** comprises one or more compartments **(602** and **604).** The cartridge **600** physically separates the resin into separate compartments **(602** and **604),** which may be achieved with a divider **605.**

In some exemplary embodiments, the cartridge **600** further comprises a platform **606** that includes multiple build surfaces **607** and **608.** Cartridge **600** is similar to cartridge **101** as discussed above but includes multiple (i.e., in this case dual) reservoirs and dual built-in build surfaces **607** and **608** suitable for building components of a 3D-pritned part that may require different materials or different parts, for example a set of dentures or a dental appliance. In some exemplary embodiments, cartridge **600** further comprises dual print screens or bottom surfaces **609** and **610** that are transparent and function similarly to surface **111** - holding the forming material inside cartridge **600** and allowing suitable light to pass through in order to cure the forming material therein for building the intended 3D objects.

Referring to **FIG. 7****,** a perspective view of a resin tank or reservoir assembly **700** is illustrated. Reservoir assembly **700** may be provided sealed and prefilled with resin, or may be simply provided for the user to fill with forming material as required. As such, this is an alternative to a cartridge configuration of the present invention, but to an embodiment in which a reservoir assembly is used in conjunction with a separate platform configured to register with reservoir assembly **700.** In some exemplary embodiments, reservoir assembly **700** includes a reservoir **701** that is smaller in volume than conventional forming material tanks. The small volume is constrained to accommodate for a single model build. Reservoir assembly **700** is configured to house or hold a light curable resin or forming material. In some exemplary embodiments, reservoir **701** of reservoir assembly **700** is prefilled with forming material. In some exemplary embodiments, reservoir **701** of reservoir assembly **700** is geared towards maximizing the resin height with minimal cross-sectional area configured to optimize for the amount of resin being used.

In some exemplary embodiments, the minimal cross-sectional area of reservoir **701** supports up to one single 3D-printed object. For example, the minimal cross-sectional area is adapted to receive just enough forming material to build a single crown. The reduction in cross sectional area along with a build platform **800** (shown in **FIG. 8****)** leads to displacement of the resin, allowing for easier flowing of the resin. In some exemplary embodiments, reservoir assembly **700** comprises a smaller print surface or print screen **702.** In some exemplary embodiments, the smaller print screen allows for usage of alternate materials for optically clear printing surface.

In exemplary embodiments, as shown in the view of **FIG. 7****,** an outer or surrounding surface **703** is configured to sit on a conventional forming material tank so that a conventional 3D printer, for example, may be retrofitted to be used with reservoir assembly **700** and thus in accordance with the present invention. A frame **704** may exemplarily support the surrounding surface **703** and hence the reservoir **701** of the reservoir assembly **700.** During use, the reservoir assembly **700** may be simply placed over a conventional tank.

Referring to **FIG. 8-9,** different perspective views of a build platform **800** are illustrated. The build platform **800** is identical to a larger build platform. In some exemplary embodiments, build platform **800** comprises a z-axis arm. In some exemplary embodiments, build platform **800** further comprises a print area **801.** Print area **801** of the build platform **800** may be modified to fit in the print screen **702** of reservoir assembly **700.** In some exemplary embodiments, build platform **800** further comprises at least one built-in heater, for example a heater such as is described in U.S. Patent Application 17990256**,** which is incorporated by reference. Build platform **800** may employ a larger surface area exposed to the resin to achieve a faster heat up time.

Turning now to the next set of figures, **FIG. 10** illustrates an exploded view of a cartridge in accordance with some exemplary embodiments of the present invention, and **FIG. 11** illustrates a perspective view of a cartridge in accordance with the embodiment illustrated in **FIG. 10****.** More specifically, cartridge **1000** is shown, including a platform adapter **1001** that both seals the cartridge and provides a connection means to an actuator or movement arm of an additive manufacturing device such as a 3D printer, a platform **1002,** a reservoir assembly **1003** that is adapted to register with platform **1002,** a reservoir assembly adapter body **1004** configured to receive at least a portion of the reservoir assembly **1003** of the cartridge **1000,** a reservoir assembly adapter **1005,** and an adapter base **1006** configured to secure cartridge **1000** to the additive manufacturing or printing device (not shown).

In some exemplary embodiments, cartridge **1000** comprises a single-use cartridge for building a three-dimensional (3D) object using an additive manufacturing device. In exemplary embodiments, the cartridge includes a reservoir assembly **1003** including a reservoir **1003a** sealed and prefilled with a forming material; a transparent layer **1003b** adapted to hold the forming material inside the reservoir **100,** the transparent layer **1003b** further adapted to allow polymerizing light to pass through for polymerization of at least a layer of the forming material; and a platform **1002** slidably housed inside the reservoir assembly adapted to move vertically along a z-axis in relation to the transparent layer **1003b** and adapted to support a 3D object built on a surface **1002a** of the platform **1002.**

In some exemplary embodiments, reservoir **1003a** includes a divider (not shown in this view, but see **FIG. 6****)** that divides the reservoir into multiple reservoirs adapted to hold one or more types of forming materials; and the platform includes multiple build surfaces adapted to register with each of the multiple reservoirs.

In some exemplary embodiments, a cavity is formed between the platform and the reservoir assembly to hold the forming material inside the cavity. In some exemplary embodiments, movement of the platform during use of the cartridge exposes the forming material inside the cavity to the built surface of the platform (see for example, **FIG. 1A****).**

In some exemplary embodiments, cartridge **1001** further comprises a penetrable layer or sealing surface on a top side or bottom side of the cartridge configured to secure the platform inside the reservoir when the cartridge is in a sealed state. In some exemplary embodiments, the sealing surface is made of a flexible material that moves and flexes according to a forming cycle.

In some exemplary embodiments, cartridge includes platform adapter **1001,** which is configured to connect the platform to an actuator of the additive manufacturing device (for example a print arm (not shown in this view)). In some exemplary embodiments, platform adapter **1001** is configured to puncture a penetrable layer sealing the forming material inside reservoir **1003a** of reservoir assembly **1003.**

In some exemplary embodiments, as shown, cartridge **1000** further includes reservoir assembly adapter **1005** configured to secure the reservoir assembly **1003** to a light module of the additive manufacturing device. In some exemplary embodiments, the reservoir assembly adapter **1005** interacts with the reservoir assembly via a mechanical fastener or a magnetic fastener device incorporated therein. A base **1006** may be configured to secure the adapter in place to a preexisting printer or additive manufacturing device.

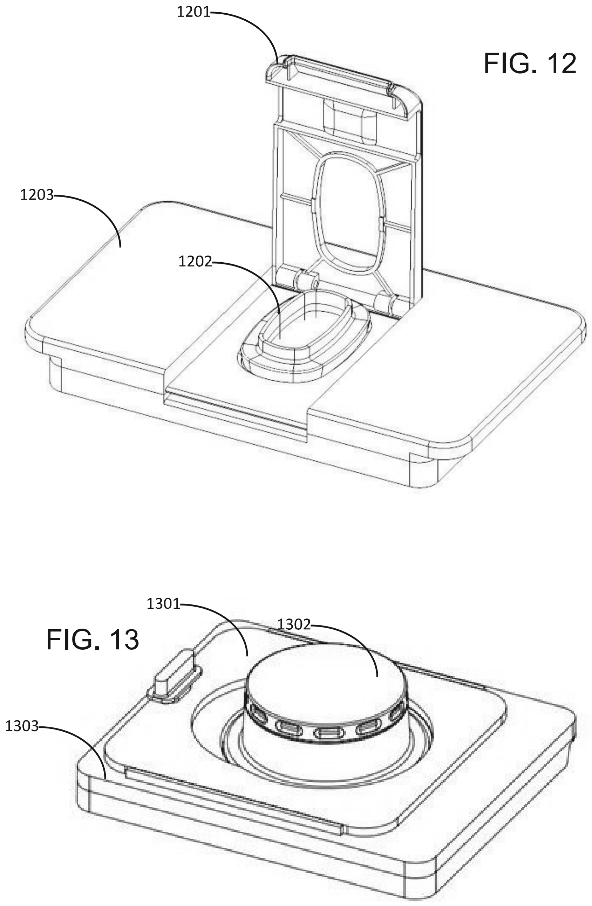

**FIG. 12 - FIG. 17** illustrates different perspective views of adapters in accordance with some exemplary embodiments of the present invention. More specifically, these figures show different types of adapters that secure a cartridge in accordance with the present invention to an existing printer or additive manufacturing device.

**FIG. 12** shows a latch-based assembly, which includes a latch locking mechanism **1201,** a cartridge receiving aperture **1202,** and an adapter base **1203.** In this mechanism, the cartridge is grabbed by a latch built onto the adapter. This latch can open to the top or to the sides.

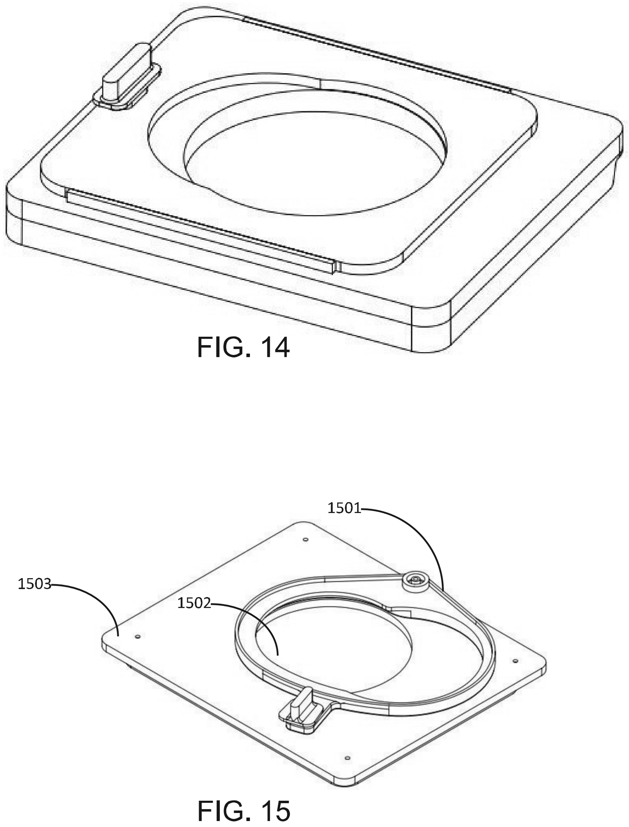

**FIG. 13** shows a slider-based assembly, which includes a cartridge receiving aperture **1302** (shown with a cartridge secured therein), a latch locking mechanism **1301,** and an adapter base **1303.** In this mechanism, the cartridge is held by a feature on the adapter which is engaged/disengaged with the help of a slider. **FIG. 14** shows the same components without the cartridge installed therein.

**FIG. 15** shows a swing-based assembly, which includes a cartridge receiving aperture **1502,** a locking mechanism **1501,** and an adapter base **1503.** In this mechanism, a swing on the adapter is used to engage/disengage the cartridge. The swing can be operated manually by the user or can be engaged electronically.

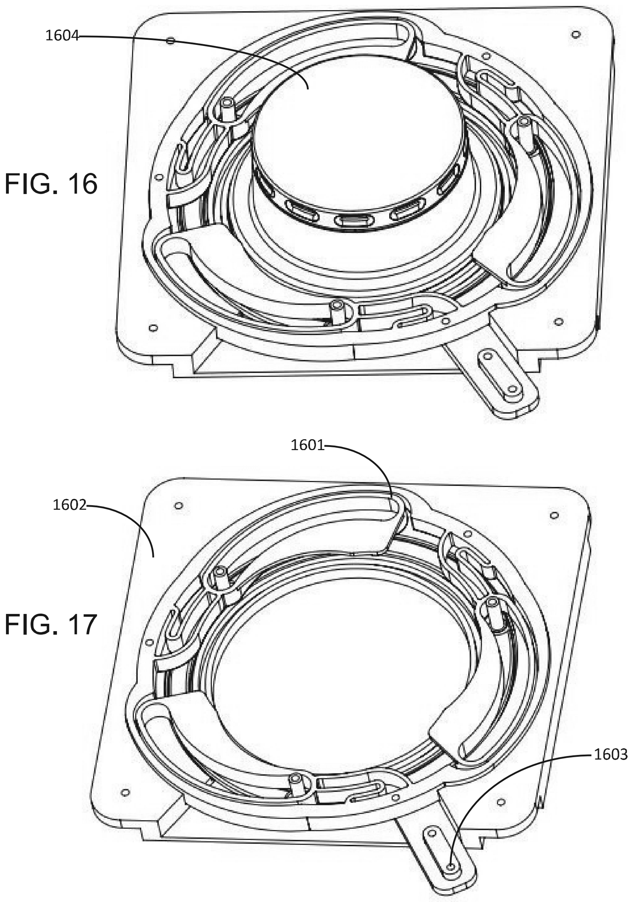

**FIG. 16** and **FIG. 17** show an aperture-based assembly, which includes a cartridge receiving aperture, shown with a cartridge **1604,** an aperture locking mechanism **1601, 1603,** and an adapter base **1602.** In this mechanism, the cartridge is engaged/disengaged via mechanical features similar to one employed by a camera. The aperture is decreased to engage the cartridge and is increased to disengage. This mechanism can be triggered manually by the user or electronically.

Advantageously, in some exemplary embodiments, the container of the present invention allows operators to go through the printing process with minimal resin handling, which eliminates the need to measure the resin during setup. The build platform arm and the external printer features get very little resin exposure and do not require user cleaning. The build platform is utilized for application-specific containers to minimize the resin waste during the small print batches. The container is used to print with multiple materials at once. Further, the container and build platform may be disposable or single use.

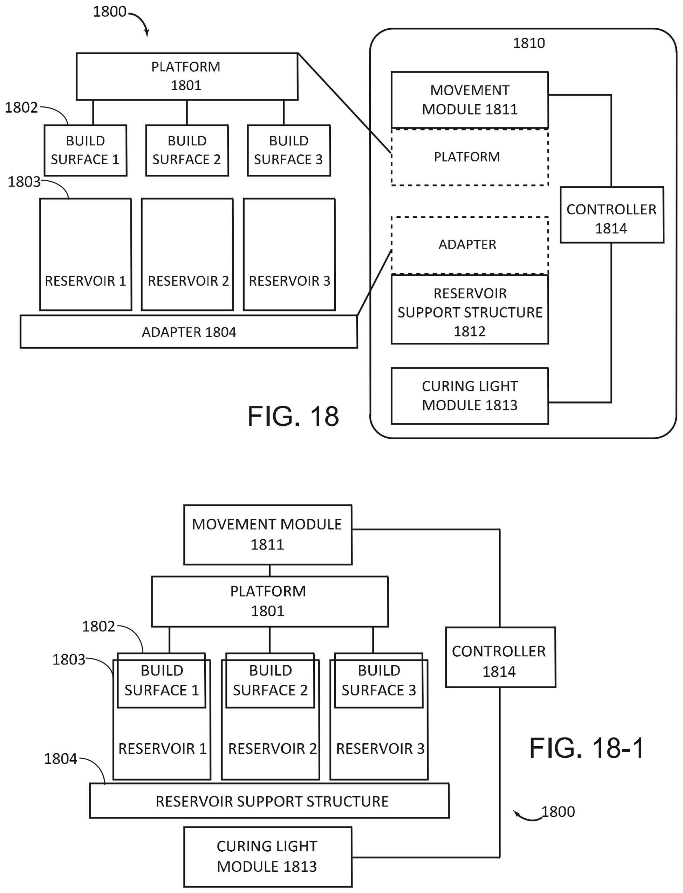

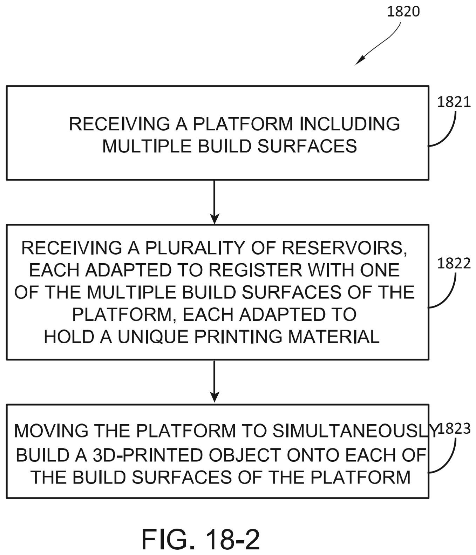

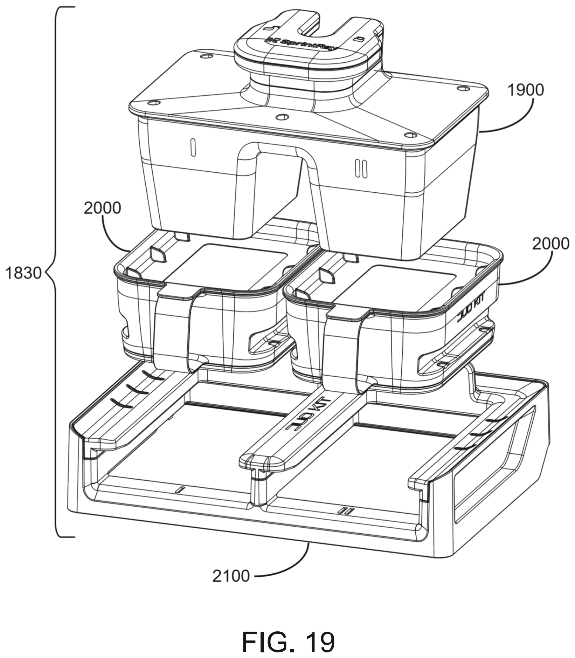

Turning now to the next set of figures, another aspect of the present invention is disclosed in **FIG. 18** (a block diagram of a device or kit in accordance with some exemplary embodiments of the present invention), **FIG. 18-1** (a block diagram of a system in accordance with some exemplary embodiments of the present invention, **FIG. 18-2** (a flow chart of a method in accordance with some exemplary embodiments of the present invention), and **FIG. 19** (an exploded view of a 3D printing kit in accordance with the present invention).

Generally, embodiments of a printing device is illustrated in these views, which may be a single device, or a system - such as a kit - for retrofitting an existing 3D printer to print multiple 3D objects or multiple three-dimensional components of a single object simultaneously; meaning during the same printing run of the 3D printer.

In some embodiments, and in no way limiting the scope of the present invention, the kit may be a dual printing kit - with components suitable for retrofitting an existing 3D printer to print two 3D objects simultaneously. Naturally, instead of "dual" the kit may be adapted to print three, or four, or any feasible plurality of 3D objects. The 3D objects may be a wide variety of 3D objects, and may be related or unrelated. When the 3 objects relate to a single component or print job, the present invention has proven to be most efficient, as discussed further below. For example, and without limiting the scope of the present invention, a system in accordance with this aspect of the invention may be used to print 3D objects such as dental components or dental appliances using biocompatible resins suitable for the same. In some exemplary embodiments, the 3D objects may include dentures, nightguards, aligners, crowns, just to name a few non-limiting examples. In the case of dentures, for example, the gums portion of the dentures may be built using a first set of one or more biocompatible resins or printing materials stored in a first reservoir; and the teeth portion of the dentures may be built using a second set of one or more biocompatible resins or printing materials stored in a second reservoir. The 3D-printed gums may be built onto a first build surface of the platform, while the teeth portion may be built onto a second build surface of the platform. Both components of the 3D-printed dentures (i.e., the teeth and gums) may be built or printed simultaneously or on a single run of the 3D printer; as the platform of the printer is activated both components of the dentures are built at the same time. In this way, the building of the 3D-printed dentures is more efficient.

Similarly, in the case of nightguards or aligners, or even crowns - treatments that often require several similar but not identical components, it is useful to build or print multiple versions simultaneously or on a single run of the 3D printer; as the platform of the printer is activated multiple complementary or corresponding components (i.e., of the desired nightguards, aligners, or set of crowns) are built at the same time.

In some exemplary embodiments, a dual material system may comprise a kit/ The kit may include: a dual build platform, a dual resin tank or reservoir, and an adapter. The dual build platform includes two build surfaces on a single platform, which are independent of each other - that is each build surface is adapted to receive thereon a 3D printed object that is polymerized on that build surface only; each build surface is dimensionally and positionally matched to the corresponding reservoir. The reservoirs are also independent of each other so that each reservoir is adapted to hold a unique printing material, meaning the printing material in each reservoir is suitable for printing a 3D object on a corresponding build surface of the platform only. In some embodiments, as will be discussed below, a unique printing material in one reservoir may differ in composition from a unique building material in a second reservoir (e.g., when building dentures the printable resin suitable for the dentures is typically a different composition than the printable resin for building the teeth portion of the dentures). Moreover, an adapter may be provided with the system in order to facilitate securing the reservoirs to an existing base or support structure of an existing 3D printer, and also to align the reservoirs with each of the build surfaces of the platform. As mentioned above, this device configuration enables the simultaneous printing with two different photopolymer resins, significantly reducing overall printing time and improving printing efficiency.

Turning now specifically to **FIG. 18****,** a 3D printing system or kit, suitable for retrofitting a 3D printer to print multiple 3D-printed objects, is illustrated. More specifically, this figures depicts system or kit **1800,** which comprises a platform **1801** adapted to be used with 3D printer **1810,** the removable platform **1801** including a plurality of build surfaces **1802** (i.e., although three build surfaces are shown, platform **1801** may include just two build surface, or four, or five, etc. without deviating from the spirit or scope of the present invention). Accordingly, platform **1801** is typically removable so that a user can retrofit their existing 3D printer with the capabilities of the present invention. As will be discussed below, in some embodiments a printer dedicated for the purposes described here may be provided without deviating from the scope of the present invention - and in those embodiments platform **1801** may not necessarily be removable or interchangeable with other platforms. In exemplary embodiments, platform **1801** is however removable.

Moreover, system **1800** further comprises a plurality of reservoirs **1803** adapted to register with the plurality of build surfaces **1802** of the platform **1801.** In exemplary embodiments, each reservoir is sealable so that the reservoirs may be provided to a user pre-filled with printable material suitable for specific 3D object or component for a 3D object as discussed above. Accordingly, although not necessary, reservoirs **1803** may be sealable and store a unique printing material inside ready for use (as will be discussed further below). In other exemplary embodiments, the reservoirs may be sealable but are not prefilled with printing material or resin; in such exemplary embodiments, before printing, a user needs to pour the printing material or resin into the reservoir to start the printing.

Moreover, system **1800** further comprises an adapter **1804** configured to secure the plurality of sealable reservoirs **1803** to a base of 3D printer **1810** in a manner so that: each of the plurality of sealable reservoirs **1803** are aligned with a curing light module **1813** of 3D printer **1810,** and each of the plurality of sealable reservoirs **1803** is aligned and registers with a corresponding build surface of the plurality of build surfaces **1802** of the platform **1801.**

Accordingly, providing removable platform **1801** (which includes the plurality of independent build surfaces **1802**), plurality of reservoirs **1803,** and adapter **1804,** facilitates the retrofitting of existing 3D printer **1810** for simultaneous printing in accordance with the present invention, including without limitation, enabling the simultaneous printing of multiple components or complementary 3D objects with multiple different photopolymer resins during a single print job - significantly reducing overall printing time and improving printing efficiency. For example, platform **1801** may be coupled to a movement module of 3D printer **1810** (typically an actuator or motor including an arm capable of moving the platform during the build process), and adapter **1804** may be coupled to a base of 3D printer **1810** such as a reservoir support structure that is suitable for receiving a reservoir for that 3D printer. As such, adapter **1804** typically includes a geometry that registers with support structure **1812** of 3D printer **1810.** In some exemplary embodiments, adapted **1804** is adapted to couple or register with a body or housing of curing light module **1813.** For example, and without limiting the scope of the present invention, adapter **1804** may include a geometry, perimeter, or coupling that otherwise match or are designed to register with a body of the curing light module of the existing printer, such as a display cartridge (e.g., an LCD display cartridge) or housing that forms part of curing light module **1813.** In this way, the transparent substrate that forms a base of each reservoir is adequately positioned by way of the adapter **1804** in alignment with both platform and curing light engine of the existing 3D printer.

As mentioned above, reservoirs **1803** are removably coupled to adapter **1804** so as to align the reservoirs with the platform (secured to 3D printer **1810**) and curing light module **1813** of 3D printer **1810.** Once the components of system **1800** are in place, controller **1814** of 3D printer **1810** may be configured to move the platform thereby simultaneously moving the plurality of build surfaces to facilitate the polymerization of each unique printing material in each reservoir onto the build surfaces - layer by layer - to build a 3D-printed object onto each of the build surfaces of the platform. In exemplary embodiments, controller **1814** may be configured to control the curing light exposure timing in order to address any multiple different printing materials having different cure-times; that is, a suitable algorithm or software executable by controller **1814** may be configured to control the curing light exposure time accordingly, whereby the shorter cure-time job lights off first, leaving it to rest until the longer cure-time job finishes. Independent control of the curing light exposure towards one of the multiple reservoirs is desirable to address curing times as well as 3D objects with different heights or dimensions. For example, and without limiting the scope of the present invention, if part A is being built on a first reservoir and that part is 2cm in height, and part B is being built on a second reservoir and is 3cm in height, printing parts A and B may be started simultaneously by projecting separate patterns for each. Once part A is finished, controller **1814** can stop light module **1813** from projecting a pattern for part A and continue projecting a pattern for B until part B is completed.

**FIG. 18-1** depicts a similar system but one that incorporates each component - platform, reservoirs, and reservoir support structure, as a single integral 3D printer. As may be appreciated by a person of ordinary skill in the art, there are advantages to having a dedicated device for the purposes of the present invention, but there are also advantages to being able to retrofit an existing printer into a printer that enables the functionalities in accordance with the present invention.

Turning now to the next figure, **FIG. 18-2****,** a flow chart of a method in accordance with some exemplary embodiments of the present invention is illustrated. More specifically, **FIG. 18-2** illustrates a flow chart of method **1820** performed by a 3D printer, for simultaneously printing components of a dental appliance. It should be understood that although presented in a particular sequence, the steps of method **1820** may include additional steps, with more or less steps in different embodiments, or even in a different sequence, without deviating from the scope of the present invention.

In step **1821,** a removable platform adapted to be used with the 3D printer may be received, wherein the removable platform includes a plurality of build surfaces. This may include, for example, the coupling or connecting of platform **1801** to printer **1810** - in some exemplary embodiments, 3D printer may detect that the printing platform is secured in place and ready for a printing job.

In step **1822,** a plurality of sealable reservoirs, each adapted to register with one of the multiple build surfaces of the platform, and each adapted to hold a unique printing material, may be received. This may include, for example, securing the plurality of sealable reservoirs **1803** to a base of the 3D printer **1810** by way of adapter **1804** in a manner so that each of the plurality of sealable reservoirs **1803** are aligned with curing light engine **1813** of 3D printer **1810,** wherein the sealable reservoirs **1803** are further adapted to register with the plurality of build surfaces **1802** of the platform **1801.**

In step **1823,** moving platform **1801** and projecting a curing light to simultaneously build a 3D-printed object onto each of the build surfaces **1802** of platform **1801.** As referenced above, this step may include controlling the curing light module 1813 in a manner so that, as multiple different printing materials may have different cure-times or different 3D objects may have different dimensions, a suitable algorithm or software executable by controller **1814** may be configured to control the cure light exposure time towards each respective reservoir accordingly.

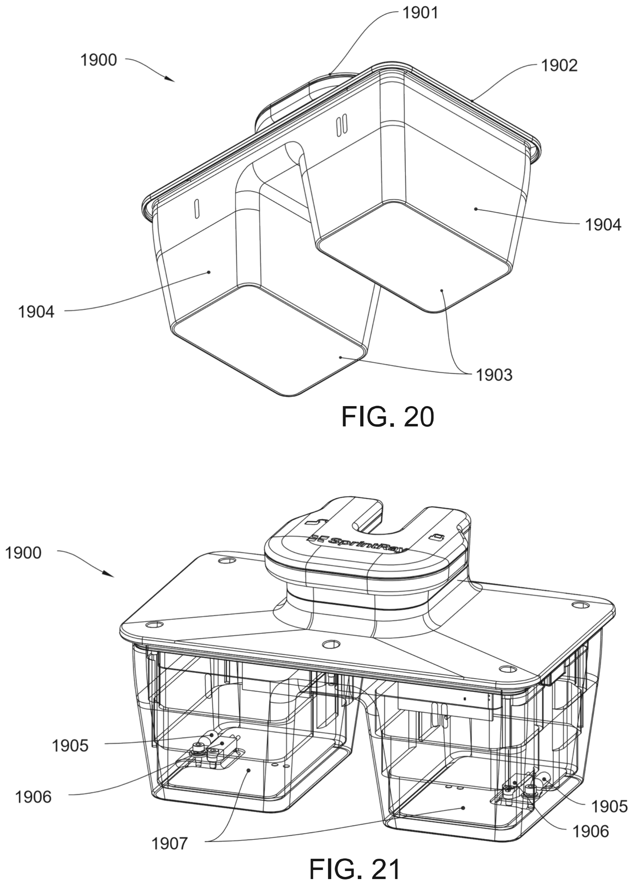

Turning now to the next set of figures, **FIG. 19 - FIG. 32** illustrate various views of a multi-material printing kit in accordance with exemplary embodiments of the present invention. **FIG. 19** illustrates an exploded view of a 3D printing kit in accordance with the present invention. More specifically, **FIG. 19** illustrates a dual material printing kit **1830,** which includes platform **1900,** two reservoirs **2000,** and an adapter **2100,** wherein platform **1900** includes two distinct and independent build surfaces **1903** (see **FIG. 20**) and the plurality of reservoirs **2000** are adapted to register with the plurality of build surfaces **1903** of the platform **1900.** In some exemplary embodiments, such as the one shown in these views, platform **1900** is defined at least in part by a main body from which multiple platform bodies **1904** extend to a terminal surface that forms each of the plurality of build surfaces **1903.** That is, each of the plurality of build surfaces **1903** comprise of a surface on one of the multiple platform bodies **1904** that form platform **1900.**

In some exemplary embodiment, each of the plurality of reservoirs **2000** may be adapted to store a unique printing material and register with a corresponding build surface **1903.** In this mechanism, each of the plurality of reservoirs **2000** may be dimensionally and positionally matched to a corresponding build surface of the plurality of build surfaces **1903.** In some exemplary embodiments, each of the plurality of reservoirs **2000** may be adapted to operate independently of the other reservoirs of the plurality of reservoirs **2000,** meaning that each reservoir may be independently removed or secured to adapter **2100,** and that each reservoir may be used to independently build a 3D object that is distinct from a 3D object built in an adjacent reservoir. Notable, although platform 1900 essentially controls the simultaneous movement of each build surface 1903, as discussed above the curing light engine may be configured to address varying material curing times and 3D object dimensions by directing the appropriate light pattern for the appropriate timing towards each reservoir region adapted to receive the curing light. In this way, different 3D objects with different printing materials may be printed or built simultaneously.

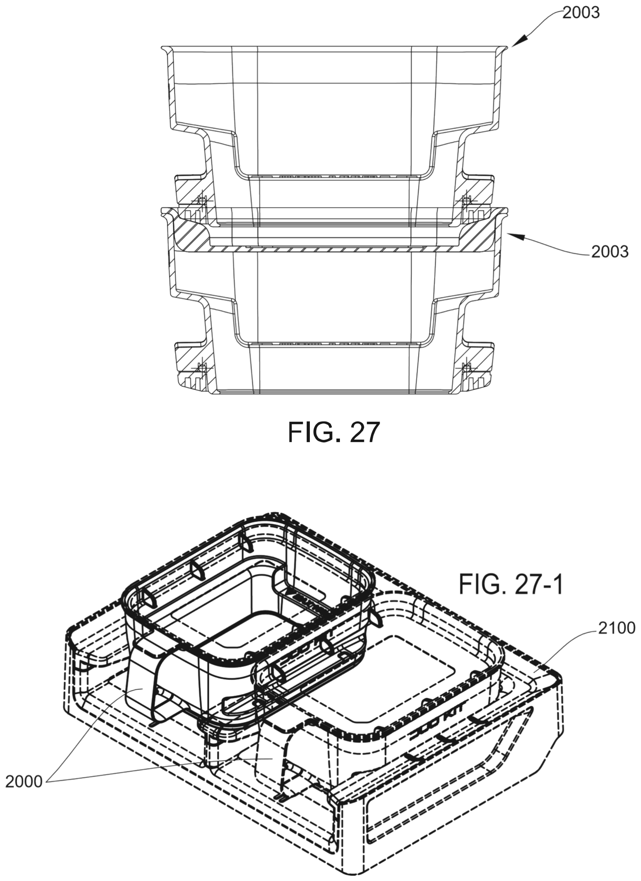

As illustrated in **FIG. 19** and **FIG. 27****-1,** the adapter **2100** may be adapted to register with the plurality of reservoirs **2000.** In some exemplary embodiments, the adapter **2100** may be employed to adapt an existing additive manufacturing device such as a 3D printer for retrofitting a 3D printer to print multiple 3D-printed objects by utilizing a 3D printing kit in accordance with the present invention. In some exemplary embodiments, the adapter **2100** may be configured to secure the plurality of reservoirs **2000** to a 3D printer. In some exemplary embodiments, the adapter **2100** may be affixed or removably coupled to the 3D printer.

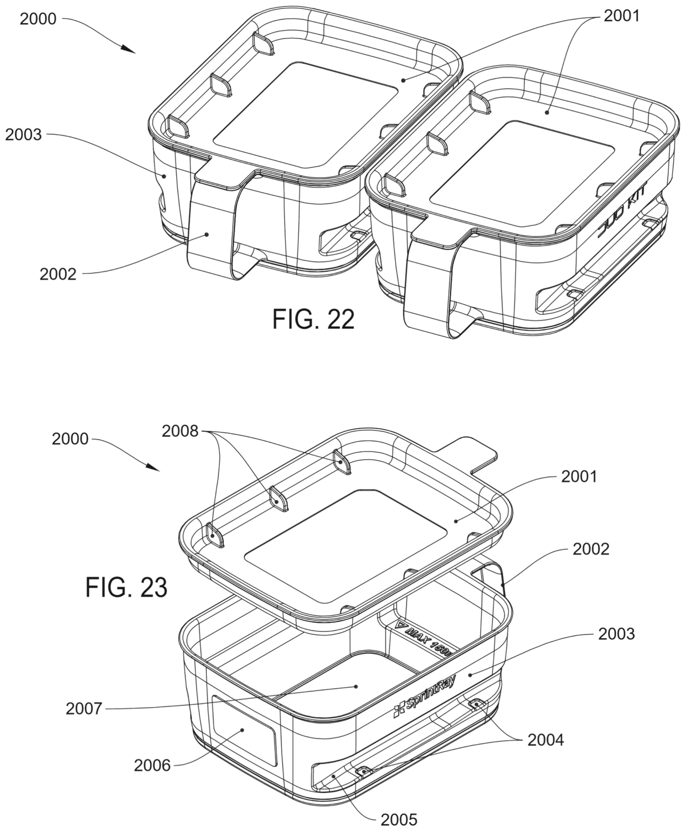

In some exemplary embodiments, the 3D printing kit may be a dual material kit. In some exemplary embodiments, the platform **1900** may be a dual build platform with a first build surface and a second build surface as illustrated in **FIGS. 19** and **20****.** In some exemplary embodiments, the plurality of reservoirs **2000** may be a dual resin tank with first resin tank and a second resin tank as illustrated by **FIGS. 19** and **22****,** wherein the first reservoir may be adapted to store a first printing material and the second reservoir may be adapted to store a second printing material.

**FIG. 20** illustrates a posterior bottom perspective view of a platform of a 3D printing kit in accordance with the present invention. As illustrated in **FIG. 20****,** the platform **1900** may include a platform handle **1901,** a platform cover **1902,** and multiple build platform bodies **1904,** wherein each one of the multiple build platforms bodies includes a build surface **1903.** In some exemplary embodiments, the multiple build platform bodies **1904** are mechanically fixed to each other, and in some embodiments as depicted in this view, are integral with a body of platform **1900.**

In some exemplary embodiments, the platform handle **1901** may be adapted to facilitate the handling of the platform by a user of a 3D printing kit in accordance with the present invention. In some exemplary embodiments, platform handle **1901** may be further adapted to secure the platform **1900** onto a 3D printing device. For example, an in no way limiting the scope of the present invention, in some exemplary embodiments the platform **1900** may be secured to a printing arm of a 3D printing device. In some exemplary embodiments, as illustrated in **FIG. 21****,** the platform handle **1901** may include a U-shaped concavity to facilitate the securing of the platform handle **1901** to a 3D printing device. In other exemplary embodiments, other shapes and structural architypes for the platform handle **1901** may be implemented for the purpose of securing said platform handle **1901.**

In some exemplary embodiments, the lower part of the platform handle **1901** may be removably fixed to the platform cover **1902** by a securing mechanism. For example, and in no way limiting the scope of the present invention, the securing mechanism may include a plurality of nuts and bolts situated along the outer edges of the lower part of the platform handle **1901** and an upper center area of the platform cover **1902.**

In some exemplary embodiments, the platform cover **1902** may be removably fixed to the multiple build platform bodies **1904.** For example, and in no way limiting the scope of the present invention, the securing mechanism may be a plurality of nuts and bolts situated along the outer edges of the platform cover **1902** and the upper part of the multiple build platform bodies **1904.** In some exemplary embodiments, the securing mechanism is adapted to fix and seal the multiple build platform bodies **1904** to prevent any material such as a photopolymer resin or other debris from entering the multiple build platform bodies **1904.**

In some exemplary embodiments, the multiple build platform bodies **1904** are arranged parallel to one other and each of the multiple build platforms may include a build surface **1903.** In some exemplary embodiments, each build surface **1903** may be adapted to independently build a 3D printed object while being positioned on the same horizontal plane as each other build surface **1903** to facilitate the simultaneous creation of multiple 3D-printed objects. In some exemplary embodiments, each build surface **1903** may be adapted to facilitate the polymerization of a unique printing material. For example, and in no way limiting the scope of the present invention, each build surface **1903** may be adapted to facilitate the polymerization of a unique photopolymer resin. In some exemplary embodiments, the material comprising the build platform **1904** may be a hard anodized aluminum with a laser-etched pattern to optimize adhesion. In other exemplary embodiments, the build platform **1904** of a 3D printing kit may be comprised of other materials that optimize adhesion as known by those of ordinary skill in the art.

**FIG. 21** illustrates an isometric side view of a platform of a 3D printing kit in accordance with the present invention, further illustrating a detailed view of the interior of the multiple build platforms. In some exemplary embodiments, as illustrated in **FIG. 21****,** the interior of the multiple build platform bodies **1904** may include a temperature sensor **1905,** an overheat protection device **1906,** and a heating pad **1907,** wherein the heating pad **1907** may be adapted to heat each of the multiple build platform bodies **1904** to ensure uniform temperature distribution during the printing process and ensure more even heating of the photopolymer resin. In some exemplary embodiments, the heating pad **1907** may be further adapted to independently heat each of the multiple build platform bodies **1904** based on the type of printing material used to print the 3D-printed object.

In some exemplary embodiments, the heating pad **1907** may be adapted to reach a maximum temperature. For example, and in no way limiting the scope of the present invention, the heating pad **1907** may be adapted to heat up to a maximum temperature of 40°C. In some exemplary embodiments, the temperature sensor **1905** may be configured to dynamically monitor the heating temperature of each of the multiple build platform bodies **1904** in real-time. In some exemplary embodiments, the overheat protection device **1906** may be adapted to deactivate the heating pad **1907** when the temperature of the multiple build platforms exceeds a certain threshold to prevent the heating pad **1907** from malfunctioning or causing burns to the user due to excessive temperature.

**FIG. 22** illustrates an isometric side view of the plurality of tanks of a 3D printing kit in accordance with the present invention. In some exemplary embodiments, as shown in **FIG. 22****,** each reservoir **2003** of the plurality of reservoirs **2000** may include a reservoir cover **2001,** wherein each reservoir **2003** is adapted to sealably store a printing material. In some exemplary embodiments, the reservoir cover **2001** may be removably positioned at the top of each reservoir **2003.** In some exemplary embodiments, the material of the reservoir cover **2001** may be rubber. For example, and in no way limiting the scope of the present invention, the material of the reservoir cover **2001** may be a thermoplastic polyurethan (TPU) or some other material with rubber and plastic properties. When a reservoir **2003** is in an idle state, the reservoir cover **2001** may be placed on top of said reservoir **2003** to prevent the printing material stored inside the reservoir **2003** from deteriorating due to air or light exposure from the external environment. Each reservoir **2003** of the plurality of reservoirs **2000** is adapted to be independent of the other reservoirs of the plurality of reservoirs **2000** and is adapted to store a unique printing material. For example, and in no way limiting the scope of the present invention, each reservoir **2003** may store a unique photopolymer resin. In other exemplary embodiments, each reservoir **2003** of the plurality of reservoirs **2000** may store the same printing material. In some exemplary embodiments, the plurality of reservoirs **2000** may be a dual reservoir including a first reservoir and a second reservoir, the first reservoir storing a first printing material and the second reservoir storing a second printing material, wherein the first printing material and the second printing material are two different types of photopolymer resins.

**FIG. 23** illustrates an exploded view of one of the plurality of reservoirs of a 3D printing kit in accordance with the present invention. In some exemplary embodiments, as illustrated in **FIG. 23****,** each reservoir **2003** may include a handle **2002,** an RFID tag **2006,** and a membrane **2007.** In some exemplary embodiments, the handle **2002** may be positioned on the side of each reservoir **2003** such that the handle **2002** is facing the user and is adapted to facilitate the user's handling of the reservoir **2003.** In some exemplary embodiments, the RFID tag **2006** is situated on the rear side of each reservoir **2003,** wherein the RFID tag **2006** is adapted to detect whether the reservoir **2003** is connected to the adapter **2100** of a 3D printing kit in accordance with the present invention. In some exemplary embodiments, the RFID tag **2006** will connect with a reader **2102** positioned inside the rear side of the adapter **2100** when the reservoir **2003** is pushed into the adapter **2100.** The reader **2102** may be adapted to recognize and read information stored in the RFID tag **2006,** indicating that the reservoir **2003** is connected to the adapter **2100.** In some exemplary embodiments, the RFID tag **2006** may be writable and adapted to store relevant information about the reservoir **2003.** For example, and in no way limiting the scope of the present invention, the RFID tag **2006** may include information regarding the amount of print material stored within the reservoir **2003,** the type of print material stored inside the reservoir **2003,** and the number of remaining print cycles.

In some exemplary embodiments, the reservoir also includes a membrane **2007** positioned at the bottom of the reservoir **2003.** In some exemplary embodiments, the membrane **2007** may comprise of a material that enhances durability and lifespan when exposed to highly corrosive print materials. For example, and in no way limiting the scope of the present invention, the material of a membrane may be ACF-5 to enhance the lifespan of the reservoir **2003** adapted to store highly corrosive photopolymer resins.

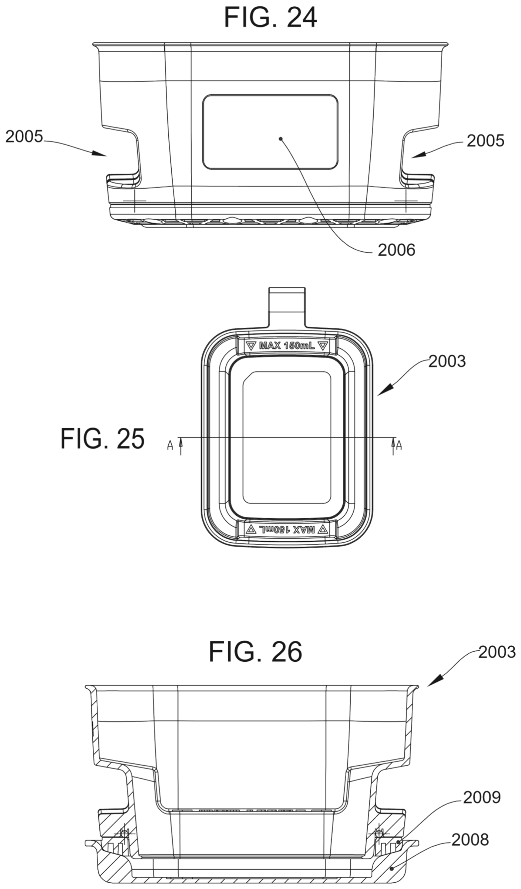

**FIG. 24** illustrates a rear view of a reservoir of a 3D printing kit in accordance with the present invention. As illustrated in **FIG. 24****,** each side of each reservoir **2003** includes an insertion space **2005,** which matches the protruding portion **2103** of the base bracket of the adapter **2100.** The protruding portion **2103** extends into the adapter's fitting area for each reservoir **2003.** Along the direction of insertion/removal of the reservoir **2003,** two positioning beads **2104** are positioned beneath the protruding portion **2103.** The positioning beads **2104** match the grooves **2004** of the reservoir **2003,** thereby securing the reservoir **2003** in the adapter **2100.**

Alternatively, the positioning beads **2104** can be positioned above or on the side of the protruding portion **2103,** and the size and position of the positioning beads **2104** are matched with the grooves **2004** which are positioned above or on the side of the insertion spaces **2005** of the reservoir **2003.** The number of positioning beads **2104** can be one or more. Alternatively, other mechanical structures capable of achieving positional locking can also be used in place of the positioning beads **2104.** Preferably, the height of the insertion channel or space **2005** gradually converges along the direction of insertion of the reservoir **2003;** this way, when the reservoir is pushed in, it will be smoother, providing a better tactile experience for the user. Moreover, in exemplary embodiments, the locking mechanism utilizes one or more grooves **2004** in which one or more (for example, four) detents provide a retention force by compressing downward to secure the reservoir in position. An insertion channel along a depth of insertion spaces **2005** serves primarily as a guide to ensure proper alignment during tank installation.

When the reservoir **2003** is pushed into the adapter **2100,** the protruding portion **2103** of the base bracket enters the insertion space **2005,** and the eight positioning beads **2104** which are beneath the protruding portion **2103** fall into the grooves **2004** which are beneath the insertion space **2005.** Additionally, when the positioning beads **2104** fall into the grooves **2004,** they emit a sound to alert the user that the reservoir **2003** is securely positioned.

In some exemplary embodiments, the bottom of the adapter **2100** is further equipped with two sets of hooks **2105** and **2106,** which are located on the right and left sides of the adapter **2100** respectively. The two sets of hooks **2105** and **2106** are configured to secure the adapter **2100** to the 3D printing device; for example, and without limiting the scope of the present invention, these hooks may couple onto a body of the curing light engine of the 3D printer. Naturally, other coupling components may be employed, such as using similar or corresponding complimentary geometries or surfaces on the adapter body that match and register with similar or corresponding complimentary geometries or surfaces on a structure of the 3D printer. For example, in some exemplary embodiments, adapter **2100** is adapted to couple directly to an LCD cartridge of an existing 3D printer for which kit **1830** may be used to retrofit the printer for multi-material printing in accordance with the present invention.

**FIG. 25** illustrates a top view of one of the plurality of reservoirs, or reservoir **2003.** **FIG. 26** illustrates a cross-sectional view at A-A in **FIG. 25****.** **FIG. 27** illustrates a cross-sectional view of the plurality of reservoirs in a stacked state, and **FIG. 27-1** illustrates reservoirs coupled to adapter **2100.** As shown in **FIG. 27****,** two or more resin tanks or reservoirs **2003** with reservoir covers **2001** may be constructed such that they can be efficiently stored. For example, and without limiting the scope of the present invention, reservoirs **2003** may be stackable for easier storage and management by a user. This may be achieved in any number of ways, including for example by implementing a suitable shape on a surface of reservoir cover **2001.** As shown in this view, a concave shape may be formed on a top surface of the cover with three ribs **2008** on each side of the concave (see also **FIG. 23**). As shown in **FIGs. 24-27,** when reservoirs **2003** are stacked, the ribs **2008** are tangent to the bottom steel ring **2009** of the reservoir **2003,** and the shapes of both match or register, allowing the reservoirs to be stacked securely. The reservoirs may then be decoupled, unstacked, and when in use coupled to adapter **2100** as shown in **FIG. 27-1****.**

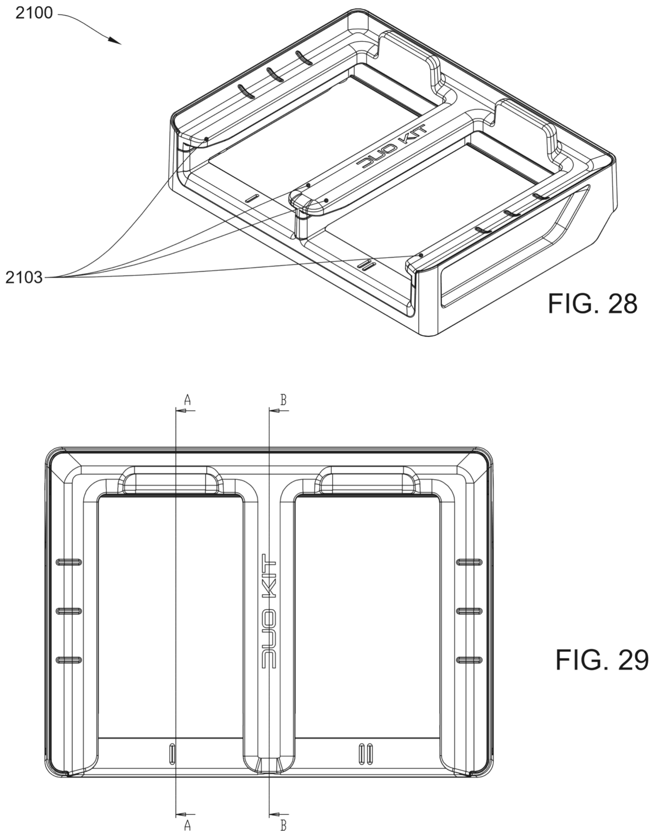

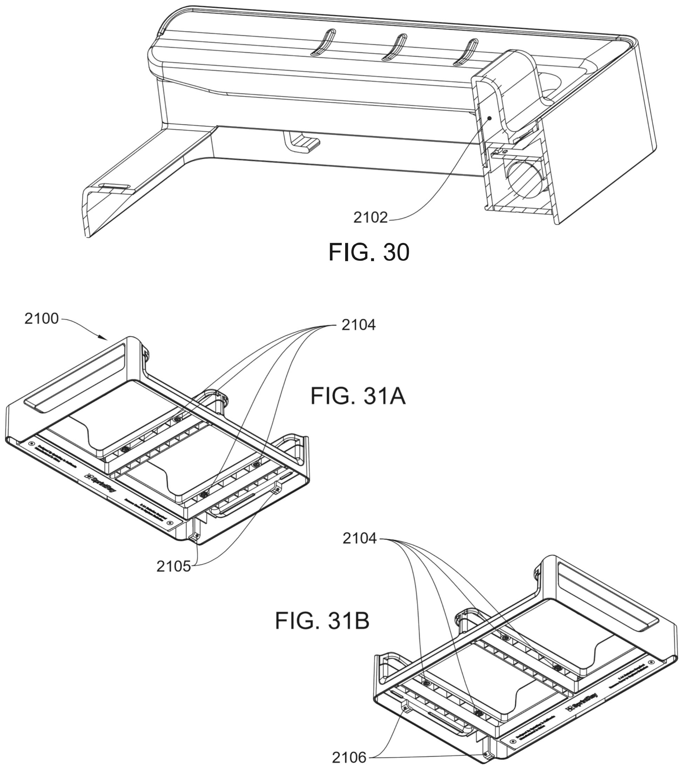

**FIG. 28** illustrates an isometric side view of adapter **2100.** **FIG. 29** illustrates a top view of adapter **2100,** and **FIG. 30** illustrates a cross-sectional view at A-A in **FIG. 29****.** In some exemplary embodiments, as shown in **FIG. 22****,** the reservoir **2003** further includes a handle **2002,** an RFID tag **2006,** and a membrane **2007.** The handle **2002** may be positioned on a side of the reservoir **2003,** the handle **2002** may be position to be facing the user, and the handle **2002** should be configured to facilitate the user's handling of the reservoir **2003.** As shown in **FIG. 23****,** the RFID tag **2006** is adhered to a side of the reservoir **2003,** in this case a posterior or rear side, and the RFID tag **2006** is configured to detect whether the reservoir **2003** is connected to the adapter **2100.** Specifically, when the reservoir **2003** is pushed into the adapter **2100,** the RFID tag **2006** connects with reader **2102** (see **FIG. 30**) which is positioned inside the rear side of the adapter **2100,** the reader **2102** can recognize and read the information, which is stored in the RFID tag **2006,** indicating that the reservoir **2003** is connected to the adapter **2100.** Furthermore, the RFID tag **2006** is writable and can store relevant information about the reservoir **2003,** such as whether photopolymer resin is present inside the reservoir **2003,** the type of photopolymer resin, and the number of print cycles.

**FIG. 31A****-****FIG. 31B** illustrates posterior bottom perspective views of adapter **2100.** More specifically, these views further illustrate the bottom structure of adapter **2100.** Furthermore, as shown in **FIG. 24****,** each side of reservoirs **2003** includes an insertion space **2005,** which matches the protruding portion **2103** of the base bracket of the adapter **2100** as shown in **FIG. 28****.** The protruding portion **2103** extends into the adapter's fitting area for each reservoir **2003.** Along with the direction of insertion/removal of the resin tank **2003,** two positioning beads **2104** are positioned beneath the protruding portion **2103,** which can be seen in **FIG. 31A** and **FIG. 31B****.** The positioning beads **2104** match the grooves **2004** of the resin tank **2003,** thereby securing the resin tank **2003** in the adapter **2100.**

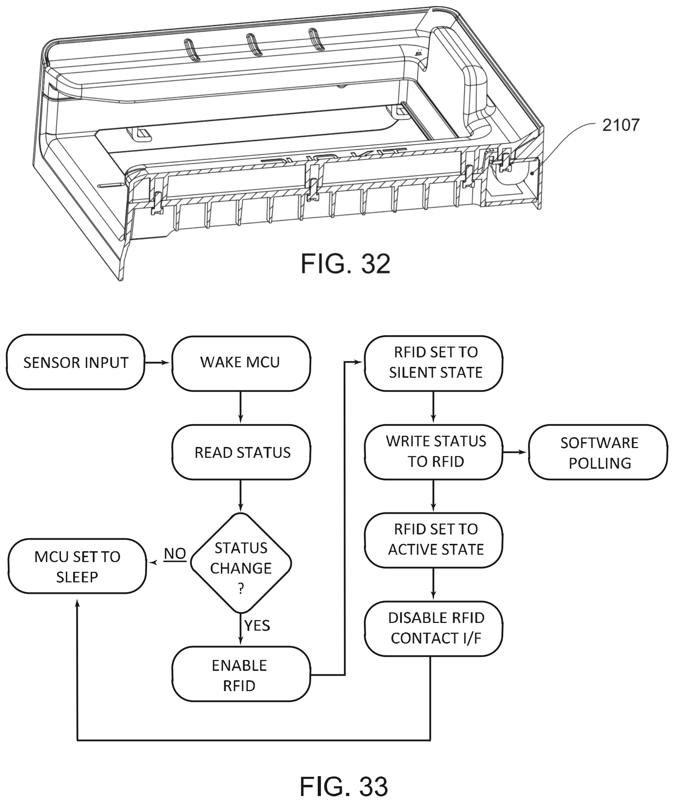

**FIG. 32** illustrates a cross-sectional view at B-B in **FIG. 29****.** In some exemplary embodiments, as shown in **FIG. 32****,** the RFID tag **2107** is positioned inside the center of the rear side of the adapter **2100.** The RFID tag **2107** is adapted to detect whether the adapter **2100** is connected to the 3D printing device. In some exemplary embodiments, when the RFID tag **2107** is connected to a reader on the 3D printing device, the reader can recognize and read the information stored in the RFID tag **2107,** indicating that the 3D printing device is connected to the adapter **2100.**

**FIG. 33** illustrates an exemplary flow chart for an RFID reading of an adapter of a 3D printing kit in accordance with the present invention. The RFID tag **2006** is adapted to be writable and to store relevant information about the reservoir **2003** to which it corresponds. Upon activation by the Hall sensor, the MCU on the adapter **2100** transitions from sleep mode to an active state. The RFID reader **2102** on the adapter **2100** is then enabled to retrieve information from the RFID tag **2107** attached to the reservoir **2003.** If the retrieved information remains unchanged, the MCU returns to sleep mode. However, if a change is detected, the MCU first sets the active RFID tag **2107** to a silent state to prevent communication conflicts. It then writes the updated information to the active RFID tag **2107** and subsequently restores it to an active state, allowing the printer software to poll the information. After completing this process, the MCU re-enters sleep mode.

The invention has the following advantages: allows for the simultaneous printing with different photopolymer resins; and significantly improves printing efficiency, as shown in the following tables, where Table 1 shows results for a traditional printer, and Table 2 shows results using a device in accordance with the present invention:

| **Table 1** | Step | | | | | |
|---|---|---|---|---|---|---|
| Current System | Setup DM | Print | Clean setup | Setup crown | Print | Done |
| Time | 2min | 25min | 4min | 2min | 15min | / |
| Total Time | 48min | | | | | |

| **Table 2** | Step | | |
|---|---|---|---|
| Dual System | Setup DM and Crown | Print | Done |
| Time | 3min | 25min | / |
| Total Time | 28min | | |

As can be seen from **Table 1** and **Table 2,** the use of the dual material kit can reduce the printing time by up to 42%. The present invention provides a printing device for a dual material kit, which enables the simultaneous printing with two different photopolymer resins, significantly reducing overall printing time and improving printing efficiency.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular system, device or component thereof to the teachings of the disclosure without departing from the essential scope thereof. Therefore, it is intended that the disclosure not be limited to the particular embodiments disclosed for carrying out this disclosure, but that the disclosure will include all embodiments falling within the scope of the appended claims. Moreover, the use of the terms first, second, etc. do not denote any order or importance, but rather the terms first, second, etc. are used to distinguish one element from another.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The described embodiments were chosen and described in order to best explain the principles of the disclosure and the practical application, and to enable others of ordinary skill in the art to understand the disclosure for various embodiments with various modifications as are suited to the particular use contemplated.

## Claims

1. A three-dimensional (3D) printing system for retrofitting a 3D printer to print multiple 3D-printed objects, comprising:
a platform, removable from the 3D printer, including a plurality of build surfaces; and
an adapter, removable from the 3D printer, configured to secure a plurality of independent reservoirs to the 3D printer, wherein each of the plurality of independent reservoirs is adapted to store one or more printing materials, align with a curing light engine of the 3D printer, and register with a corresponding build surface of the plurality of build surfaces of the platform.

2. The 3D printing system of claim 1, wherein the adapter is adapted to couple onto a body of the curing light engine of the 3D printer.

3. The 3D printing system of claim 1, wherein each reservoir stores a unique printing material.

4. The 3D printing system of claim 1, wherein each build surface is adapted to independently build a 3D printed object while being positioned on the same horizontal plane as each other build surface.

5. The 3D printing system of claim 1, wherein the build surfaces are arranged parallel to one other.

6. The 3D printing system of claim 1, wherein an interior of the platform includes a temperature sensor.

7. The 3D printing system of claim 1, wherein an interior of the platform includes an overheat protection sensor.

8. The 3D printing system of claim 1, wherein an interior of the platform includes a heating element adapted to heat one or more of the build surfaces.

9. The 3D printing system of claim 1, wherein one or more of the reservoirs includes a handle.

10. The 3D printing system of claim 1, wherein the platform includes a hard anodized aluminum with a laser-etched pattern to optimize adhesion.

11. The 3D printing system of claim 1, wherein the reservoirs are stackable.

12. The 3D printing system of claim 1, wherein the reservoirs include a detection device configured to be detected by the 3D printer for detecting when the reservoir is coupled to the 3D printer.

13. The 3D printing system of claim 12, wherein the detection device includes an RFID tag.

14. The 3D printing system of claim 12, wherein the detection device is writable and adapted to store information about the reservoirs.

15. The 3D printing system of claim 1, wherein each reservoir includes a membrane adapted to enhance durability when exposed to highly corrosive print materials.

16. The 3D printing system of claim 14, wherein the information about the reservoirs includes one or more of:
an amount of print material stored within one or more of the reservoirs;
a type of print material stored inside one or more of the reservoirs; or
a number of remaining print cycles for one or more of the reservoirs.

17. The 3D printing system of claim 1, wherein each of the plurality of reservoirs are independently removable and securable to the removable adapter.
